# EUROPEAN PATENT APPLICATION

(11) **EP 4 650 334 A1**
(43) Date of publication of application: **19.11.2025**
(21) Application number: 24741591.2
(22) Date of filing: 12.01.2024
(51) Int. Cl.: C04B 35/587, B28B 3/00, F16C 33/32

(54) **CERAMIC BALL MATERIAL PRODUCTION METHOD AND CERAMIC BALL PRODUCTION METHOD**

(30) Priority: 13.01.2023 JP 2023003971
(71) Applicant: Kabushiki Kaisha Toshiba, Tokyo 105-0023 (JP); Toshiba Materials Co., Ltd., Isogo-Ku Yokohama-Shi Kanagawa 235-0032 (JP)
(72) Inventor: OOKUBO, Kazuya, Yokohama-shi, Kanagawa 235-0032 (JP)
(74) Representative: Hoffmann Eitle
(86) International application number: PCT/JP2024/000615
(87) International publication number: WO 2024/150819

(57) **Abstract**

A method for manufacturing a ceramic ball material according to an embodiment, includes: a step of producing a ceramic green compact; a step of performing a plurality of times of a CIP process on the ceramic green compact to produce a CIP (cold isostatic pressing) green compact; and a step of sintering a CIP green compact produced by a final CIP process among the plurality of times of the CIP process to produce a ceramic sintered compact. In the step of producing the CIP green compact, after a former CIP process among the plurality of times of the CIP process is performed, an orientation of a CIP green compact produced by the former CIP process is changed, and a latter CIP process is performed.

## Description

### TECHNICAL FIELD

An embodiment to be described below generally relates to a method for manufacturing a ceramic ball material and a method for manufacturing a ceramic ball.

### BACKGROUND ART

Ceramic balls for which ceramic sintered compacts are used are being used as bearing balls. As ceramic sintered compacts, silicon nitride sintered compacts, aluminum oxide sintered compacts, zirconium oxide sintered compacts, and the like are used.

Ceramic balls are produced by polishing ceramic ball materials. Ceramic ball materials before being polished are called bare balls. As ceramic ball materials, materials produced by mold pressing, materials produced by tumbling granulation, and the like are in use. For example, Japanese Patent No. 4761613 (Patent Document 1) and Japanese Patent No. 5578429 (Patent Document 2) disclose ceramic ball materials having a band-like portion. In Patent Document 1 and Patent Document 2, the shapes of the band-like portion have been devised to improve the polishing efficiency.

### PRIOR ART DOCUMENTS

### PATENT DOCUMENT

Patent Document 1: Japanese Patent No. 4761613
Patent Document 2: Japanese Patent No. 5578429
Patent Document 3: Japanese Patent Laid-Open No. 2001-146479

### SUMMARY OF THE INVENTION

### PROBLEMS TO BE SOLVED BY THE INVENTION

The shapes of the band-like portion devised as in Patent Document 1 and Patent Document 2 have improved the polishing efficiency of ceramic ball materials, but no further improvement is shown. As a result of investigating a cause thereof, it was found that a density variation of a ceramic ball material decreases the polishing efficiency and the density variation of the ceramic ball material is derived from density unevenness of a green compact before sintering.

For a ceramic ball material intended to be used for a bearing ball, CIP (cold isostatic pressing) forming is performed on a ceramic green compact that has been molded by using a mold in a molding step. The CIP forming can be performed by uniformly applying pressure to the periphery of the ceramic green compact. However, in a CIP green compact obtained by the CIP forming of the ceramic green compact, there has been a case where density unevenness attributed to a forming step is shown.

For example, in Japanese Patent Laid-Open No. 2001-146479 (Patent Document 3), it is disclosed that CIP forming is repeated 100 times. However, there has been a case where the density unevenness of the CIP green compact is not resolved even after CIP forming is, similarly, repeated a plurality of times. Sintering performed with the density unevenness of the CIP green compact unresolved causes a density variation of sintered compact, i.e., the ceramic ball material.

Therefore, an investigation was made regarding a cause of density unevenness being unresolved during CIP forming, and it was consequently found that the density unevenness of the CIP green compact is attributed to the fact that the position of a ceramic green compact that is CIP-formed remains fixed during a plurality of times of a CIP process.

The embodiment is intended to deal with such a problem and to provide a method for manufacturing a ceramic ball material having a reduced density variation.

### MEANS FOR SOLVING THE PROBLEMS

A method for manufacturing a ceramic ball material according to an embodiment, includes: a step of producing a ceramic green compact; a step of performing a plurality of times of a CIP process on the ceramic green compact to produce a CIP (cold isostatic pressing) green compact; and a step of sintering a CIP green compact produced by a final CIP process among the plurality of times of the CIP process to produce a ceramic sintered compact. In the step of producing the CIP green compact, after a former CIP process among the plurality of times of the CIP process is performed, an orientation of a CIP green compact produced by the former CIP process is changed, and a latter CIP process is performed.

### BRIEF DESCRIPTION OF THE DRAWINGS

FIG. 1 is an appearance view showing one example of a ceramic ball material according to an embodiment.
FIG. 2 is an appearance view showing another example of the ceramic ball material according to the embodiment.
FIG. 3 is an appearance view showing one example of a bearing ball according to the embodiment.
FIG. 4 is a cross-sectional view showing one example of a method for manufacturing a ceramic ball material according to the embodiment.
FIG. 5 is a view showing a configuration example for realizing the method for manufacturing a ceramic ball material according to the embodiment.

### DESCRIPTION OF EMBODIMENTS

Hereinafter, an embodiment of a method for manufacturing a ceramic ball material and a method for manufacturing a ceramic ball will be described in detail with reference to the drawings.

A method for manufacturing a ceramic ball material according to an embodiment, includes: a step of producing a ceramic green compact; a step of performing a plurality of times of a CIP process on the ceramic green compact to produce a CIP (cold isostatic pressing) green compact; and a step of sintering a CIP green compact produced by a final CIP process among the plurality of times of the CIP process to produce a ceramic sintered compact. In the step of producing the CIP green compact, after a former CIP process among the plurality of times of the CIP process is performed, an orientation of a CIP green compact produced by the former CIP process is changed, and a latter CIP process is performed.

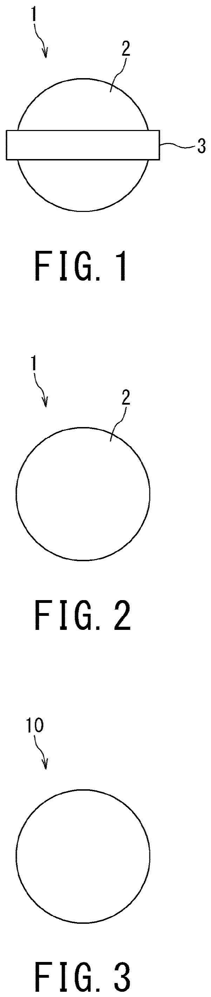

One example of a ceramic ball material is shown in FIG. 1 and FIG. 2. In the drawings, reference numeral 1 indicates a ceramic ball material, reference numeral 2 indicates a spherical portion, and reference numeral 3 indicates a band-like portion. FIG. 1 is a view exemplifying the ceramic ball material 1 having the band-like portion 3, and FIG. 2 is a view exemplifying the ceramic ball material 1 not having the band-like portion 3. In addition, FIG. 3 is a view showing one example of a bearing ball. In the drawing, reference numeral 10 indicates a bearing ball.

The ceramic ball material 1 shown in FIG. 1 includes the spherical portion 2 and the band-like portion 3. This ceramic ball material 1 is manufactured in a case where a ceramic green compact produced by mold pressing is CIP-processed and sintered without removing a band-like portion of the ceramic green compact with sandpaper or the like. On the other hand, the ceramic ball material 1 shown in FIG. 2 includes only the spherical portion 2. This ceramic ball material 1 is manufactured in a case where a band-like portion of a ceramic green compact produced by mold pressing is sufficiently removed with sandpaper or the like and the ceramic green compact is CIP-processed and sintered or a case where a ceramic green compact produced by tumbling granulation is CIP-processed and sintered. The ceramic ball material 1 may or may not have the band-like portion 3.

The ceramic ball material 1 is a material for producing a ceramic ball by being polished. A ceramic ball that has been further polished becomes mainly the bearing ball 10 (shown in FIG. 3). The ceramic ball material 1 before being polished is also called a bare ball in some cases.

For example, in ASTM F2094, surface roughness Ra is determined according to the grade of a bearing ball. The largest surface roughness R is 0.013 µm. In order to make a ceramic ball into a bearing ball, polishing that makes the surface roughness Ra be 0.013 µm or less is required. The polishing that makes the surface roughness Ra be 0.013 µm or less is called finishing.

The ceramic ball material 1 is made of a ceramic sintered compact. The ceramic sintered compact is one selected from a silicon nitride sintered compact, an aluminum oxide sintered compact, a zirconium oxide sintered compact, and a zirconia-toughened alumina sintered compact. In addition, the ceramic sintered compact is preferably a silicon nitride-based sintered compact. This is because the silicon nitride-based sintered compact has a high strength and excellent wear resistance.

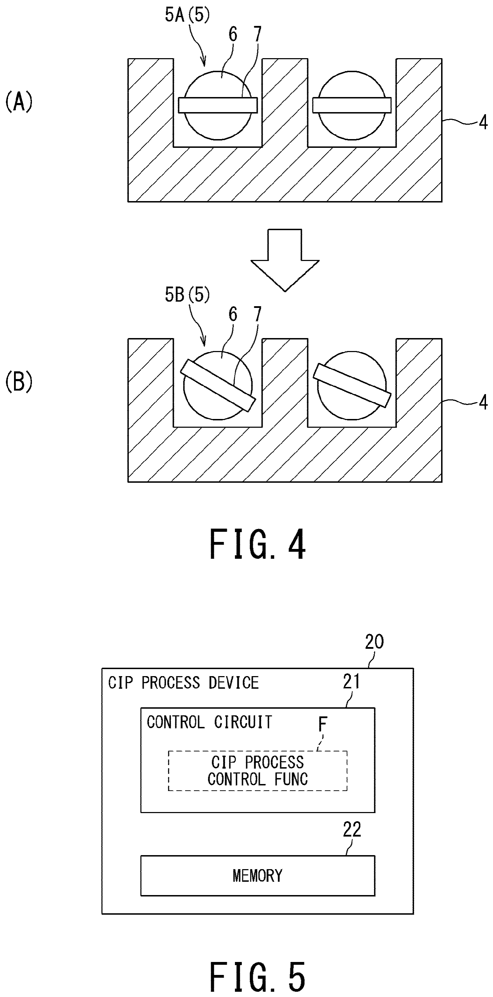

FIG. 4 shows one example of a method for manufacturing a ceramic ball material according to the embodiment. In the drawing, reference numeral 4 indicates a rubber mold, reference numeral 5 indicates a green compact, reference numeral 5A indicates a ceramic green compact as the green compact 5, reference numeral 5B indicates a CIP green compact as the green compact 5, reference numeral 6 indicates a spherical portion, and reference numeral 7 indicates a band-like portion. FIG. 4 shows one example of the rubber mold 4 filled with the green compacts 5 at the time of performing a CIP step. FIG. 4 exemplifies the green compact 5 having the band-like portion 7, which corresponds to the ceramic ball material 1 having the band-like portion 3 (shown in FIG. 1), but the green compact 5 may not have the band-like portion 7. In addition, in FIG. 4, the rubber mold 4 is filled with the green compacts 5 at two places, but the number of places filled is arbitrary.

First, a step of producing the ceramic green compact 5A having the spherical portion 6 is performed. A raw material powder for the ceramic green compact 5A having the spherical portion 6 is prepared. For example, for the silicon nitride sintered compact, a powder mixture of a silicon nitride powder and a sintering aid powder is used as a raw material powder. In addition, a binder or the like may be added thereto as necessary to make a raw material powder slurry. The ceramic green compact 5A is formed by a molding method such as mold press forming, tumbling granulation, or the like. The ceramic green compact 5A having the band-like portion 7 is manufactured in the case of being produced by mold pressing without removing the band-like portion 7 with sandpaper or the like. On the other hand, a ceramic green compact not having the band-like portion 7 (not shown) is manufactured in the case of being produced by mold pressing with the band-like portion 7 sufficiently removed with sandpaper or the like or by tumbling granulation.

In the mold press molding, a mold is filled with the raw material powder or the raw material powder slurry. As the mold, a mold having an inner surface that is a substantially spherical crown-like recessed portion is used. Mold pressing using an upper mold and a lower mold each having an inner surface that is a substantially spherical crown-like recessed portion makes it possible to manufacture the ceramic green compact 5A having the spherical portion 6 and the band-like portion 7 formed across the circumference. On the ceramic green compact 5A having the band-like portion 7, a process of removing the band-like portion 7 may be performed as necessary.

In addition, the tumbling granulation is a molding method in which small round nuclei are made using the raw material powder (or the raw material powder slurry) and the small round nuclei are granulated while being rolled. In the tumbling granulation, the ceramic green compact not having the band-like portion 7 (not shown) can be obtained.

Density unevenness of the CIP green compact 5B is mainly caused during the mold press molding or the tumbling granulation. The mold press forming is uniaxial forming using upper and lower molds. When the upper and lower molds collide with each other, the molds may break. In order to prevent this, a large amount of the raw material powder is injected thereinto. Therefore, the band-like portion 7 is formed. There is a subtle difference in how pressure is applied between the spherical portion 6 and the band-like portion 7. Accordingly, density unevenness is caused in the vicinity of the spherical portion 6 and the band-like portion 7. In addition, in the tumbling granulation, the nuclei are granulated while being rolled, and a density difference is thus caused between the nucleus and the periphery. In both methods, particularly, when an attempt is made to increase the diameter of the green compact 5, larger density unevenness is caused. In addition, when the green compact 5 having density unevenness is sintered, a density variation is also present in a resultant sintered compact.

Next, a step of performing a CIP process a plurality of times on the ceramic green compact 5A having the spherical portion 6 to produce the CIP green compact 5B is performed. In the step of producing the CIP green compact 5B, the orientation of the green compact 5 is changed, and the CIP process is then continuously performed.

The CIP process refers to cold isostatic pressing and is a pressure molding method in which isostatic pressure is applied in a pressure medium such as water. When a rubber mold is filled with the ceramic green compact 5A, and isostatic pressure is applied, it is possible to increase the density of the CIP green compact 5B. On the other hand, it has not been possible to sufficiently remove the density unevenness of the CIP green compact 5B. Meanwhile, other media other than water can also be used as the pressure medium.

As a solution to this problem, when the CIP process is performed a plurality of times on the ceramic green compact 5A, the orientation of the green compact 5 is changed between the former CIP process and the latter CIP process. This makes it possible to reduce the density unevenness of the CIP green compact 5B.

This CIP process is performed a plurality of times. FIG. 4 shows one example of the rubber mold 4 filled with the green compacts 5. Division (A) of FIG. 4 shows the orientation of the ceramic green compacts 5A in the case of performing the first CIP process, and division (B) of FIG. 4 shows the orientation of the CIP green compacts 5B in the case of performing the second CIP process. The orientation of the green compacts 5 filled in the rubber mold in division (A) of FIG. 4 is changed in division (B) of FIG. 4. It is important to change the orientation of the green compacts 5 between the first and second CIP processes. The degree or direction of the orientation of the green compact 5 changed are arbitrary. The change in the orientation of the green compact 5 is important even when the degree thereof is slight. In addition, the degree of the orientation changed is preferably a shift of 1° or more. The degree is more preferably 5° or more. In the case of filling each recessed portion of the rubber mold 4 with the green compact 5, the degree of the orientation of each green compact 5 changed is arbitrary. That is, the degree of the orientation of each green compact 5 changed may be the same as or different from each other.

In addition, in a case where pressure is uniformly applied to the green compact 5 at the time of the CIP forming, it is preferable that after the former CIP process, the pressure that is applied to the green compact 5 is once returned to normal pressure, and the next CIP process is then performed. In a case where pressure is uniformly applied to the green compact 5 at the time of the CIP forming, the density unevenness of the CIP green compact 5B can be resolved to some extent. When the orientation of the green compact 5 is changed after the pressure is returned to normal pressure, it becomes easy to change the orientation of the green compact 5 before the next CIP process is performed.

In addition, the CIP process of the green compact 5 is performed twice or more. The upper limit of the number of times of the CIP process is not particularly limited, but is preferably 10 times or less. Even when the CIP process has been performed 11 or more times, partial density unevenness of the CIP green compact has been almost removed, and there is a possibility that an additional increase in density may become difficult. Particularly, in the case of obtaining the CIP green compact 5B for obtaining a bearing ball having a diameter of 1 mm or more and 70 mm or less, the number of times of the CIP process is preferably in a range of twice or more and 10 times or less.

In addition, the conditions for each CIP process may be the same as or different from each other. That is, the pressure, time, and the like for each CIP process are arbitrary. In addition, the pressure of the CIP process is preferably in a range of 50 MPa or more and 300 MPa or less. In addition, the time of the CIP process is preferably in a range of 5 s or longer and 120 s or shorter. The CIP process time refers to a time during which the CIP pressure is retained.

In addition, in the CIP process, it is preferable to use a rubber mold having a Shore hardness of 20 or higher and 55 or lower. Isostatic pressure is applied to the rubber mold 4 containing the green compact 5. When the Shore hardness Hs is in a range of 20 or higher and 55 or lower, the amount of deformation can be made homogenous. Therefore, it is possible to have deformability enabling the surface of the green compact 5 and the rubber mold to be brought into uniform contact with each other. In addition, the durability of the rubber mold is also favorable. Suitably, it is more preferable to use a rubber mold having a Shore hardness of 30 or higher and 50 or lower. The shore hardness Hs is measured in accordance with JIS-Z-2246 (2000).

When such a CIP process is performed, it is possible to increase the bulk density of the CIP green compact 5B while suppressing the inside density unevenness.

The bulk density refers to a density including a pore connected to the outside air (open cell) and a pore trapped inside (closed cell) in a polycrystal, a powder layer, a green compact, a sintered compact, or the like. The bulk density can be obtained by the following equation based on the green compact 5 (the ceramic green compact 5A or the CIP green compact 5B). Bulk density = mass of green compact 5 ÷ bulk volume of green compact 5 The bulk volume of the green compact 5 can be obtained by, for example, measuring the diameters or widths of the spherical portion and the band-like portion with a micrometer.

When the CIP process is performed a plurality of times, it is possible to make an increase rate of the bulk density of the final CIP green compact 5B relative to the CIP green compact 5B after the first CIP process be 0.5% or more. The final CIP green compact 5B refers to a green compact after the final CIP process among the plurality of times of the CIP process and is a green compact that is subjected to a subsequent degreasing step.

For example, it is possible to make the increase rate of the bulk density of the CIP green compact 5B after the second CIP process relative to the CIP green compact 5B after the first CIP process be 0.5% or more. Similarly, it is possible to further increase the bulk density of the CIP green compact 5B after the third CIP process relative to the CIP green compact 5B after the second CIP process.

The increase rate of the bulk density of the final CIP green compact 5B relative to the CIP green compact 5B after the first CIP process (hereinafter also simply referred to as "the increase rate of the bulk density") is preferably 0.5% or more, furthermore, 1% or more. When the increase rate of the bulk density is less than 0.5%, there is a possibility that the effect of the CIP process performed a plurality of times may lack. The upper limit of the increase rate of the bulk density is not particularly limited but is preferably 20% or less. When the increase rate of the bulk density is more than 20%, there is a possibility that a variation in the bulk density in the final CIP green compact 5B may become large. Therefore, the increase rate of the bulk density is preferably 0.5% or more and 20% or less and suitably, more preferably 1% or more and 17% or less.

The increase rate of the bulk density is obtained by the following equation. Increase rate of bulk density = [(bulk density of final CIP green compact 5B - bulk density of CIP green compact 5B after first process) ÷ bulk density of CIP green compact 5B after first process] × 100 (%)

Additionally, when the CIP process is performed a plurality of times each time the orientation of the green compact 5 is changed, it is possible to suppress a variation in the bulk density in one final CIP green compact 5B. In obtaining the variation in the bulk density of the final CIP green compact 5B, the final CIP green compact 5B is vertically and horizontally cut into four pieces, and the bulk density of each piece is measured. Among the four bulk densities, the maximum value is indicated by σ1, and the minimum value is indicated by σ2. In addition, the variation in the bulk density can be obtained by the following equation. Variation in bulk density of CIP green compact = [(σ1 - σ2)/σ1] × 100 (%)

When the CIP process is performed a plurality of times each time the orientation of the green compact 5 is changed, it is possible to make the variation in the bulk density of the final CIP green compact 5B be 0% or more and 10% or less, furthermore, 0% or more and 5% or less. When the variation in the bulk density in one final CIP green compact 5B is suppressed, it is possible to reduce the density variation of the ceramic sintered compact.

Next, the degreasing step of degreasing the final CIP green compact 5B is performed. In the degreasing step, a majority of an organic binder that has been added in advance is degreased by being heated in a non-oxidative atmosphere at a temperature of 500°C or higher and 800°C or lower for one hour or longer and four hours or shorter. Examples of the non-oxidative atmosphere include a nitrogen gas atmosphere, an argon gas atmosphere, and the like. If necessary, an organic matter is treated in an oxidative atmosphere such as the atmosphere, and the amount of the organic matter remaining in a degreased compact is controlled.

Next, a step of sintering the degreased compact is performed. The sintering step is preferably performed under a condition of 1650°C or higher and 2000°C or lower. As a non-oxidative atmosphere, a nitrogen gas atmosphere or a reducing atmosphere containing a nitrogen gas is preferable. In addition, regarding the pressure in a firing furnace, a pressurized atmosphere is preferable.

When the degreased compact is fired in a low-temperature state where the sintering temperature is lower than 1650°C, the grain growth of ceramic crystal grains is not sufficient, and it is difficult to obtain a dense sintered compact. On the other hand, when the degreased compact is fired at a temperature of higher than 2000°C as the sintering temperature, in a case where the atmospheric pressure in the furnace is low, there is a concern that the ceramic may decompose, and it is thus preferable to control the sintering temperature to be in the above-described range. The sintering time is preferably in a range of three hours or longer and 12 hours or shorter. For example, in the case of a silicon nitride sintered compact, when the sintering temperature exceeds 2000°C, there is a possibility that silicon nitride may decompose into Si and N₂.

In addition, it is preferable to perform an HIP (hot isostatic pressing) process on the sintered compact after the sintering step. The step of sintering the degreased compact is also called a first sintering step, and a step of performing the HIP process on the sintered compact is also called a second sintering step.

The HIP process is preferably performed under conditions of 1600°C or higher and 1900°C or lower at a pressure of 80 MPa or higher and 200 MPa or lower. The HIP process makes it possible to reduce pores in the sintered compact. This makes it possible to obtain a dense sintered compact. When the pressure is lower than 80 MPa, an effect of pressure being applied is insufficient. In addition, when the pressure is as high as higher than 200 MPa, there is a possibility that a load on a manufacturing device may become high. The HIP process makes it possible to make the relative density of the ceramic sintered compact, which will be described below, be 99% or higher.

When the sintering step or the HIP process is ended, the ceramic ball material 1 is completed.

The manufacturing method of the present embodiment makes it possible to make the relative humidity of the ceramic ball material 1 made of the sintered compact obtained in the sintering step be 97% or higher. In addition, it is possible to make the relative humidity of the ceramic ball material 1 made of the sintered compact obtained by the HIP process be 99% or higher. Here, the relative humidity refers to a rate (%) of an apparent density to a theoretical density.

At this time, the apparent density of the ceramic sintered compact is obtained by the Archimedes method. In addition, the theoretical density of the ceramic sintered compact can be obtained by the following equation. Theoretical density of ceramic sintered compact = (theoretical density of ceramic × volume ratio) + (theoretical density of sintering aid × volume ratio) As the theoretical densities of the ceramic and the sintering aid, known theoretical values may be used. For example, the specific gravity of silicon nitride is 3.19 g/cm³ for α-type silicon nitride and 3.13 g/cm³ for β-type silicon nitride. In the case of a typical silicon nitride sintered compact, the β-type silicon nitride is a dominant component, and simply, 3.13 g/cm³ may be used in calculation. In addition, the specific gravity is 5.03 g/cm³ for yttrium oxide, 4.26 g/cm³ for titanium oxide, and 9.68 g/cm³ for hafnium oxide.

Furthermore, in the manufacturing method of the present embodiment, it is possible to densify the ceramic ball material 1 to a relative density of 97% or higher and to suppress the variation in density to 0% or more and 2% or less. Particularly, the variation in density of the ceramic ball material 1 made of the sintered compact obtained by the HIP process can be suppressed to 0% or more and 0.5% or less. The fact that the density variation can be suppressed indicates that a variation in surface unevenness including an open cell can also be suppressed.

The density variation of the resultant ceramic ball material 1 can be measured by the following procedure. The ceramic sintered compact is divided into four pieces, and the relative density of each is measured in the same manner as described above. In addition, the density variation of the ceramic ball material 1 can be obtained by the following equation. Density variation of the ceramic ball material 1 = [(maximum value of relative densities - minimum value of relative densities) ÷ minimum value of relative densities] × 100

In a case where the surface roughness Ra of the ceramic ball material 1 is as large as more than 2 µm, since surface roughness is large, there is a possibility that the density variation may also be in a large state. Therefore, there is a possibility that uneven polishing may be caused. Therefore, the surface roughness Ra of the ceramic ball material 1 is preferably in a range of 0.2 µm or more and 2 µm or less, furthermore, 0.5 µm or more and 1.0 µm or less.

As described above, the ceramic ball material 1 is not yet subjected to polishing and finishing. The surface of the ceramic ball material 1 is preferably one selected from a sintered surface, a honed surface, or a cleaned surface. The sintered surface refers to a surface of the ceramic sintered compact obtained by the sintering step. The honed surface is a surface obtained by performing honing on the surface of the sintered compact. The honing refers to a step of spraying abrasive grains to the surface of the sintered compact to remove a foreign matter such as waste. The cleaned surface refers to the surface of the ceramic sintered compact cleaned using a cleaning solution. The cleaning solution is water or the like. The honing or the cleaning is a step of removing a foreign matter on the sintered surface and is thus differentiated from polishing.

In other words, as the method for manufacturing the ceramic ball material 1, any one or both of honing and cleaning may be performed on the ceramic sintered compact. As described above, in ASTM F2094, the surface roughness Ra is determined according to the grade of a bearing ball. In this standard, the surface roughness R of a bearing ball is a maximum of 0.013 µm. Meanwhile, the surface roughness Ra of the ceramic ball material 1 according to the embodiment is in a range of 0.2 µm or more and 2 µm or less and thus can be differentiated from a finished ceramic ball material that can be used as a bearing ball.

The ceramic ball material 1 is preferably one selected from a silicon nitride sintered compact, an aluminum oxide sintered compact, a zirconium oxide sintered compact, and a zirconia-toughened alumina sintered compact. The zirconia-toughened alumina sintered compact refers to a sintered compact obtained by mixing aluminum oxide and zirconium oxide. Suitably, the ceramic ball material 1 is more preferably a silicon nitride sintered compact.

The silicon nitride sintered compact preferably has a three-point bending strength of 850 MPa or higher or a fracture toughness of 6 MPa·m^{1/2} or higher. The three-point bending strength is measured in accordance with JIS-R-1601

(2008). The fracture toughness is measured in accordance with JIS-R-1607 (2015) and is obtained by the Niihara's equation.

The aluminum oxide sintered compact has a three-point bending strength of 450 to 550 MPa or a fracture toughness of approximately 4 MPa·m^{1/2}. In addition, the zirconium oxide sintered compact or the zirconia-toughened alumina sintered compact may have a three-point bending strength of 800 to 1000 MPa or a fracture toughness of approximately 6 MPa·m^{1/2}.

For the silicon nitride sintered compact, silicon nitride crystal grains having an aspect ratio of two or more are a dominant component. The silicon nitride sintered compact has wear resistance improved by elongated silicon nitride crystal grains intricately intertwined together. For the zirconium oxide sintered compact, zirconium oxide crystal grains having an aspect ratio of less than two are a dominant component. For the zirconia-toughened alumina sintered compact as well, zirconia-toughened alumina crystal grains having an aspect ratio of less than two are a dominant component. Therefore, the silicon nitride sintered compact has improved wear resistance.

On the other hand, for the silicon nitride sintered compact, since the elongated silicon nitride crystal grains are the dominant component, a variation is likely to be caused in recesses and protrusions on the surface of the sintered compact. Suppression of the density variation has an effect of suppressing such a variation in surface unevenness.

In addition, it is preferable to contain a grain boundary phase reinforcement material in the silicon nitride sintered compact. Examples of the grain boundary phase reinforcement material include one or more selected from oxides, nitrides, carbides, and silicides of Ti, Zr, Hf, Mo, and W. The grain boundary phase reinforcement material enters voids between the silicon nitride crystal grains and serves as a material that reinforces the grain boundary phase. The grain boundary phase reinforcement material enters the voids between the silicon nitride crystal grains and is thus effective for density variation reduction. In addition, the amount of the grain boundary phase reinforcement material is preferably in a range of 0.1 mass% or more and 7 mass% or less in terms of a single metal. In addition, in a case where two or more of Ti, Zr, Hf, Mo, and W are added as the grain boundary phase reinforcement material, the total thereof is preferably in a range of 0.1 mass% or more and 7 mass% or less in terms of a single metal. As the grain boundary phase reinforcement material, silicon carbide may also be used.

In addition, aside from the grain boundary phase reinforcement material, a compound of one or two selected from rare earth elements or aluminum may be added thereto as a sintering aid. Examples of the compound of a rare earth element or aluminum include oxides, nitrides, oxynitrides, and the like. The amount added is preferably in a range of 0.5 mass% or more and 10 mass% or less in total in terms of a metal element of the rare earth element or aluminum.

The ceramic ball material 1 may have the band-like portion 3 or may not have the band-like portion 3. FIG. 1 shows the ceramic ball material 1 having the band-like portion 3. In FIG. 1, the band-like portion 3 is formed across the circumference of the spherical portion 2. FIG. 2 shows the ceramic ball material 1 not having the band-like portion 3. The ceramic ball material 1 according to the embodiment is capable of suppressing the density variation of the ceramic ball material 1 regardless of having or not having the band-like portion 3.

The ceramic ball material 1 as described above is suitable for the bearing ball 10. The ceramic ball material 1 can be made into a ceramic ball by polishing. The ceramic ball is made into the bearing ball 10 by finishing.

The finishing for making the ceramic ball into the bearing ball 10 results in a surface roughness Ra of 0.1 µm or less.

In addition, in ASTM F2094, the surface roughness Ra is determined according to the grade of the bearing ball. The largest surface roughness Ra is 0.013 µm. In order to make the ceramic ball into the bearing ball, it is preferable to perform polishing that makes the surface roughness Ra be 0.013 µm or less as the finishing.

In addition, the bearing ball 10 preferably has a diameter of 5 mm or more. As described above, the larger the diameter, the easier the density unevenness of the CIP green compact 5B is caused. Therefore, it is more effective to suppress a density variation in the ceramic ball material 1 that is intended for the production of the bearing ball 10 having a diameter of 5 mm or more. In addition, the upper limit of the diameter of the bearing ball 10 is not particularly limited, but the diameter is preferably 70 mm or less. When the diameter is as large as more than 70 mm, there is a possibility that a load on the finishing may increase. Therefore, the diameter of the bearing ball 10 is preferably in a range of 5 mm or more and 70 mm or less, furthermore, 8 mm or more and 55 mm or less.

The ceramic ball material 1 according to the embodiment suppresses a density variation, and polishing unevenness is thus less likely to occur. Therefore, the polishing efficiency improves. In addition, the polishing allowance becomes small. Therefore, the ceramic ball material is capable of shortening the time taken for polishing and finishing and suitable for the bearing ball 10.

### (Examples)

### (Examples 1 to 4 and Comparative Examples 1 to 3)

As raw material powders for ceramic sintered compacts, powders shown in Table 1 were prepared.

Examples 1 to 3 and Comparative Examples 1 and 2 are intended to produce silicon nitride sintered compacts. In addition, Example 4 and Comparative Example 3 are intended to produce aluminum oxide sintered compacts.

**[Table 1]**

| | Raw Material Powder [mass%] |
|---|---|
| Example 1 | Si₃N₄ (91), Y₂O₃ (5), Al₂O₃ (4) |
| Example 2 | Si₃N₄ (92), Y₂O₃ (4), Al₂O₃ (2), AlN (2), TiO₂ (1) |
| Example 3 | Si₃N₄ (89), Y₂O₃ (6), Al₂O₃ (3), Mo₂C (1), SiC (1) |
| Example 4 | Al₂O₃ (95), Y₂O₃ (5) |
| Comparative Example 1 | Si₃N₄ (91), Y₂O₃ (5), Al₂O₃ (4) |
| Comparative Example 2 | Si₃N₄ (91), Y₂O₃ (5), Al₂O₃ (4) |
| Comparative Example 3 | Al₂O₃ (95), Y₂O₃ (5) |

The raw material powders were pulverized with a ball mill, and a binder or the like were added thereto to prepare raw material powder slurries.

Next, mold press molding was performed using the raw material powder slurries. As a mold, a mold having a substantially spherical crown-like recessed portion on the inner surface was used. Therefore, ceramic green compacts 5A having a band-like portion 7 on the circumference of a spherical portion 6 according to Examples 1 to 4 were produced. In addition, ceramic green compacts having a band-like portion on the circumference of a spherical portion according to Comparative Examples 1 to 3 were produced.

Next, a CIP process was performed on the ceramic green compacts 5A according to Examples 1 to 4 and the ceramic green compacts according to Comparative Examples 1 to 3. Conditions thereof are as shown in Table 2.

**[Table 2]**

| | CIP Process | | | |
|---|---|---|---|---|
| | Shore Hardness of Rubber Mold | The Number of CIP Processes | Once Return Pressure to Normal? | Change Orientation of Sintered Compact? |
| Example 1 | 20 | 6 | YES | YES |
| Example 2 | 40 | 2 | YES | YES |
| Example 3 | 55 | 3 | YES | YES |
| Example 4 | 35 | 5 | YES | YES |
| Comparative Example 1 | 30 | 1 | - | - |
| Comparative Example 2 | 70 | 2 | NO | NO |
| Comparative Example 3 | 30 | 1 | - | - |

The CIP process was performed a plurality of times on the ceramic green compacts 5A according to Examples 1 to 4. In addition, after the former CIP process, the pressure that was applied to the green compacts 5 was once returned to normal pressure, and the CIP process was then continuously performed. In addition, when the pressure was returned to normal pressure, the orientations of the green compacts 5 were changed by 1° or more.

On the ceramic green compacts according to Comparative Example 1 and Comparative Example 3, the CIP process was performed only once. In Comparative Example 2, the CIP process was performed twice, but the pressure was not returned to normal pressure, the orientation of the sintered compact was not changed, and a rubber mold having a Shore hardness of 70 was used.

CIP green compacts 5B obtained from the ceramic green compacts 5A according to Examples 1 to 4 and CIP green compacts obtained from the ceramic green compacts according to Comparative Examples 1 to 3 were produced by this CIP process step. In all of the CIP green compacts 5B of Examples 1 to 4, the increase rates of the bulk density of the final CIP green compact 5B relative to the bulk density of the first CIP green compact 5B were in a range of 0.5% or more and 20% or less. In addition, in the CIP green compact of Comparative Example 2, the increase rate of the bulk density of the second CIP green compact relative to the bulk density of the first CIP green compact became as high as 23% or more and 34% or less.

Each of the final CIP green compacts 5B obtained from the ceramic green compacts 5A according to Examples 1 to 4 was divided into four pieces, and the bulk density of each piece was measured. Among the bulk densities of the four pieces of the CIP green compact 5B, the maximum value is indicated by σ1, and the minimum value is indicated by σ2. A variation in the bulk density of the final CIP green compact 5B can be obtained by the following equation. Similarly, variations in the bulk densities of the final CIP green compacts obtained from the ceramic green compacts according to Comparative Examples 1 to 3 can also be obtained. Variation in bulk density (%) = [(σ1 - σ2)/σ1] × 100 The results are shown in Table 3.

**[Table 3]**

| | Final CIP Green Compact, Variations in Bulk Density is in Range of 0% or more and 20% or less |
|---|---|
| Example 1 | in Range |
| Example 2 | in Range |
| Example 3 | in Range |
| Example 4 | in Range |
| Comparative Example 1 | Out of Range |
| Comparative Example 2 | Out of Range |
| Comparative Example 3 | Out of Range |

As is clear from Table 3, in the final CIP green compacts 5B obtained from the ceramic green compacts 5A according to Examples 1 to 4, variations in the bulk density were suppressed. In all of the final CIP green compacts 5B obtained from the ceramic green compacts 5A according to Examples 1 to 4, the variations in the bulk density were further in a range of 0% or more and 5% or less. That is, in the final CIP green compacts 5B obtained from the ceramic green compacts 5A according to Examples 1 to 4, density variations were suppressed. In the CIP green compacts 5B having the band-like portion 7 on the circumference of the spherical portion 6 as well, density variations were suppressed.

In contrast, in Comparative Example 1 and Comparative Example 3, the CIP process was performed once, and the density variations of the CIP green compacts were large. In addition, in Comparative Example 2, the CIP process was performed twice, but the orientation of the green compact was not changed, and the variation in the bulk density thus became large.

Next, on the final CIP green compacts 5B obtained from the ceramic green compacts 5A according to Examples 1 to 4, a degreasing step, a sintering step, and an HIP process were performed. The sintering step was performed under a condition in a range from 1650°C or higher to 2000°C. In addition, the HIP process was performed under conditions of 1600°C or higher and 1900°C or lower at a pressure in a range of 80 MPa or higher and 200 MPa or lower. Ceramic ball materials 1 made of the ceramic sintered compacts were produced by these steps. Similarly, the degreasing step, the sintering step, and the HIP process were performed on the final CIP green compacts obtained from the ceramic green compacts according to Comparative Examples 1 to 3 to produce ceramic ball materials.

The relative densities and variations in relative density of the ceramic ball materials 1 obtained from the ceramic green compacts 5A according to Examples 1 to 4 by the HIP process were investigated. The obtained relative densities of the ceramic ball materials 1 are rates (%) of apparent densities measured by the Archimedes method to theoretical densities. In addition, the variations in relative densities can be obtained by the following equation after the ceramic ball materials 1 were each divided into four pieces, and the relative density of each was measured. The variations in relative densities of the ceramic ball materials obtained from the ceramic green compacts according to Comparative Examples 1 to 3 by the HIP process can also be obtained in the same manner. Variation in relative density (%) = [(maximum value of relative densities - minimum value of relative densities)/minimum value of relative densities] × 100

The results are shown in Table 4. For the variations in relative densities of the ceramic ball materials, ranges from the minimum value to maximum value of measurement values obtained by measuring 10 pieces of the respective ceramic ball materials are shown.

**[Table 4]**

| | Diameter of Ceramic Ball Material [inch] | Relative Density [%] | Variations in Relative Density [%] |
|---|---|---|---|
| Example 1 | 3/8 | 99.3 | 0-0.1 |
| Example 2 | 1·3/16 | 99.9 | 0-0.05 |
| Example 3 | 1·7/8 | 99.9 | 0-0.05 |
| Example 4 | 3/8 | 99.1 | 0-0.1 |
| Comparative Example 1 | 1·3/16 | 99.3 | 0.5-1.1 |
| Comparative Example 2 | 1·3/16 | 99.3 | 0.4-0.7 |
| Comparative Example 3 | 3/8 | 99.0 | 0.7-1.1 |

The ceramic ball materials having a 3/8-inch diameter are used to make bearing balls having a diameter of 9.525 mm. In addition, the ceramic ball materials having a 1·3/16-inch diameter are used to make bearing balls having a diameter of 30.16 mm. In addition, the ceramic ball materials having a 1·3/16-inch diameter are used to make bearing balls having a diameter of 47.62 mm.

In addition, the ceramic ball materials 1 according to Examples 1 to 4 had surface roughness Ra in a range of 0.2 µm or more and 2 µm or less.

As is clear from Table 4, in the ceramic ball materials 1 according to Examples 1 to 4, the variations in the relative density were suppressed. In addition, in the ceramic ball materials to which a grain boundary phase reinforcement material (one or more selected from Ti, Zr, Hf, Mo, and W) was added as in Example 2 and Example 3, it was possible to suppress the variations in the relative density even when the CIP process was performed twice or three times.

In contrast, the variations in the relative density of the ceramic ball materials according to Comparative Example 1 and Comparative Example 3 exceeded 0.2%. When the CIP process was performed once, the effect of suppressing the variation in the relative density was small. In addition, in Comparative Example 2 as well, the variation in the relative density exceeded 0.2%.

From what has been described above, it is found that the pressure being once returned to normal pressure and the change in the orientation of the green compact 5 at the time of performing the CIP process a plurality of times on the ceramic green compact 5A are effective for suppressing the density variation of the ceramic ball material 1 and thereby suppressing a variation in surface unevenness including an open cell.

It was shown that a method for manufacturing a ceramic ball material according to Examples 1 to 4 enables the ceramic ball materials 1 having a small density variation to be obtained. In addition, the ceramic balls obtained by polishing the ceramic ball materials 1 obtained by the manufacturing method of the ceramic ball materials 1 according to Examples 1 to 4 could be used as bearing balls.

The step of performing the CIP process a plurality of times may be realized by the control of a computer configured to control the CIP process (a CIP process device 20 shown in FIG. 5). The CIP process device 20 includes at least a control circuit 21 and a memory 22. The control circuit 21 reads out and executes a computer program stored in the memory 22 or a memory in the control circuit 21, whereby the CIP process device 20 realizes a CIP process control function F.

The control circuit 21 controls all operations of the CIP process device 20. The control circuit 21 means not only a dedicated or general purpose CPU (central processing unit), MPU (micro processor unit), or GPU (graphics processing unit) but also ASIC (application specific integrated circuit), a programmable logic device, or the like. Examples of the programmable logic device include a simple programmable logic device (SPLD), a complex programmable logic device (CPLD), a field programmable gate array (FPGA), and the like.

In addition, the control circuit 21 may be configured with a single circuit or may be configured by combining a plurality of independent control circuit elements. In the latter case, the memory 22 may be separately provided for each of the control circuit elements or a single memory 22 may store programs corresponding to the functions of the plurality of control circuit elements. The control circuit 21 is one example of a control unit.

The memory 22 is configured with, for example, a semiconductor memory element such as RAM (random access memory) or a flash memory, a hard disc, an optical disc, or the like. The memory 22 may be configured with a portable medium such as a USB (universal serial bus) memory or DVD (digital video disk). The memory 22 stores a variety of processing programs that are used in the control circuit 21 (not only application programs but also OS (operating system) and the like are included) or data necessary to execute programs. In addition, it is also possible to include GUI (graphic user interface) that frequently uses graphics to display information on a display unit to an operator and enables a basic operation to be performed with an input unit in OS.

The CIP process control function F has a function of changing the orientation of the CIP green compact 5B produced by the former CIP process after the former CIP process among the plurality of times of CIP process is performed and continuously performing the CIP process. The CIP process control function F performs the former CIP process with the ceramic green compact 5A fixed by applying pressure thereto. After the end of the former CIP process, the CIP process control function F returns the pressure applied to the CIP green compact 5B to normal pressure and then changes the orientation of the CIP green compact 5B. Next, the CIP process control function F applies pressure again to the CIP green compact 5B having the changed orientation to fix the CIP green compact and then performs the latter CIP process. Subsequently, a set of the release of the pressure applied to the green compact 5, the change in the orientation, the application of pressure, and the CIP process is repeated as many times as necessary.

For example, the CIP process control function F controls a difference in pressure that is applied to the green compact 5 after the end of the former CIP process and before the start of the latter CIP process and is thereby capable of arbitrarily changing the orientation of the green compact 5 that is disposed in the rubber mold 4. Alternatively, the CIP process control function F controls the bottom surface of the rubber mold 4 so that the bottom surface moves by a certain amount in a direction along the bottom surface toward a side wall after the end of the former CIP process and before the start of the latter CIP process and thereby rolls the green compact 5 while changing the contact point with the bottom surface of the green compact 5. In addition, the CIP process control function F controls the amount of the bottom surface of the rubber mold 4 moved and is thereby capable of arbitrarily changing the orientation of the green compact 5 that comes into contact with the bottom surface of the rubber mold 4.

A case where the CIP process control function F is realized with a computer program has been described as an example, but all or part of the CIP process control function F may be provided in the CIP process device 20 as a function of a circuit such as ASIC (application specific integrated circuit). The CIP process control function F is one example of a CIP process control unit. In addition, not only the CIP process step but also a forming step before the CIP process step or all or part of steps such as the degreasing step, the sintering step, the HIP step, and the polishing step after the CIP process step may be also realized by the control of the computer.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A method for manufacturing a ceramic ball material, comprising:
a step of producing a ceramic green compact;
a step of performing a plurality of times of a CIP process on the ceramic green compact to produce a CIP (cold isostatic pressing) green compact; and
a step of sintering a CIP green compact produced by a final CIP process among the plurality of times of the CIP process to produce a ceramic sintered compact,
wherein in the step of producing the CIP green compact, after a former CIP process among the plurality of times of the CIP process is performed, an orientation of a CIP green compact produced by the former CIP process is changed, and a latter CIP process is performed.

2. The method for manufacturing a ceramic ball material according to claim 1, wherein in the step of producing the CIP green compact, after the former CIP process is performed by applying pressure, the pressure that is applied to the ceramic green compact is returned to normal pressure, and the orientation of the CIP green compact produced by the former CIP process is then changed.

3. The method for manufacturing a ceramic ball material according to claim 1 or 2, wherein in the step of producing the CIP green compact, the plurality of times of the CIP process is twice or more and 10 times or less of the CIP process.

4. The method for manufacturing a ceramic ball material according to claim 1 or 2, wherein in the step of producing the CIP green compact, a rubber mold having a Shore hardness in a range of 20 or higher and 55 or lower is used in each of the plurality of times of the CIP process.

5. The method for manufacturing a ceramic ball material according to claim 4, wherein in the step of producing the CIP green compact, the plurality of times of the CIP process is twice or more and 10 times or less.

6. The method for manufacturing a ceramic ball material according to claim 1 or 2, wherein the ceramic sintered compact is a silicon nitride sintered compact.

7. The method for manufacturing a ceramic ball material according to claim 5, wherein the ceramic sintered compact is a silicon nitride sintered compact.

8. The method for manufacturing a ceramic ball material according to claim 1 or 2, wherein surface roughness Ra of the ceramic ball material is in a range of 0.2 µm or more and 2 µm or less.

9. The method for manufacturing a ceramic ball material according to claim 7, wherein surface roughness Ra of the ceramic ball material is in a range of 0.2 µm or more and 2 µm or less.

10. The method for manufacturing a ceramic ball material according to claim 1 or 2, wherein a porosity of the CIP green compact is 2% or less.

11. The method for manufacturing a ceramic ball material according to claim 6, wherein a porosity of the CIP green compact is 2% or less.

12. The method for manufacturing a ceramic ball material according to claim 7, wherein a porosity of the CIP green compact is 2% or less.

13. A method for manufacturing a ceramic ball, wherein polishing is performed on the ceramic ball material obtained by the method for manufacturing a ceramic ball material according to claim 1 or 2.

14. A method for manufacturing a ceramic ball, wherein polishing is performed on the ceramic ball material obtained by the method for manufacturing a ceramic ball material according to claim 7.

15. A method for manufacturing a ceramic ball, wherein polishing is performed on the ceramic ball material obtained by the method for manufacturing a ceramic ball material according to claim 8.

16. A method for manufacturing a ceramic ball, wherein polishing is performed on the ceramic ball material obtained by the method for manufacturing a ceramic ball material according to claim 12.
